Europäisches Patentamt

European Patent Office

Office européen des brevets

(11) Publication number: **0 083 826**
**B1**

(12) **EUROPEAN PATENT SPECIFICATION**

(45) Date of publication of patent specification: **10.09.86**

(21) Application number: **82300098.9**

(22) Date of filing: **08.01.82**

(51) Int. Cl.[4]: **B 65 B 55/19,** B 65 D 81/26, A 23 L 3/34, B 32 B 27/18, C 08 K 3/30

(54) Oxygen-absorbing structures for protecting contents of containers from oxidation, containers embodying such structures and method of protecting oxidation-susceptible products.

(43) Date of publication of application:
**20.07.83 Bulletin 83/29**

(45) Publication of the grant of the patent:
**10.09.86 Bulletin 86/37**

(84) Designated Contracting States:
**AT BE CH DE FR GB IT LI LU NL SE**

(56) References cited:
**WO-A-81/00230**
**GB-A-2 000 431**
**US-A-2 825 651**
**US-A-3 712 848**
**US-A-4 048 361**
**US-A-4 113 652**

(73) Proprietor: **AMERICAN CAN COMPANY**
**American Lane**
**Greenwich, Connecticut 06830 (US)**

(72) Inventor: **Farrell, Christopher J.**
**431 S. Evergreen**
**Arlington Heights Illinois (US)**
Inventor: **Tsai, Boh C.**
**101 Adler Court**
**Rolling Meadows Illinois (US)**

(74) Representative: **Harvey, David Gareth et al**
**Graham Watt & Co. Riverhead**
**Sevenoaks Kent TN13 2BN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 083 826

## Description

The present invention relates to oxygen-absorbing structures for protecting contents of containers from oxidation, containers embodying such structures and a method of protecting oxidation-susceptible products.

This disclosure relates to improved polymeric materials designed for packing comestibles and the like, and to containers made from such polymeric materials. Containers used to pack foods are often subjected to aggressive processing conditions e.g. during retorting for purposes of sterilising. Retortable containers and their methods of manufacture are disclosed in our International patent applications filed under the PCT and published under the Numbers W081/00230 and W081/00231 on 5th February, 1981. The invention the subject of this application is applicable to the subject matter disclosed in each of the aforesaid International publications.

Multilayer blow molded polymeric containers having barrier layers to reduce the permeation of oxygen through the wall of the container for protecting food or beverage packed therein against oxidation have already been proposed. The problem of oxygen permeation is well recognised and is mitigated by a suitable barrier material. Moreover, such barrier materials have been used or suggested in multilayer constructions in connection with oxygen scavenging systems in order to absorb any oxygen which might pass through the barrier or remain in the head space above the packed and processed food or beverage. More particularly, U.S. Patent No. 4,048,361 discloses a food container formed with a barrier material inside of which is a carrier layer containing a "getter". The getter may be an absorbent for any gas which permeates the barrier layer. An alternative approach includes a barrier layer on both sides of the carrier layer whereby oxygen leaving the food or coming from the outside will be slowly absorbed by the getter. The patent deals in generalities as far as concerns the particular getter and is more specific regarding container shape or construction.

U.S. Patent No. 3,586,514 discloses the use of antioxidizing agents mixed with a plastics barrier layer to reduce the permeation of oxygen to beer within a container.

U.S. patent No. 3,429,717 discloses a barrier comprising Saran in a film sandwich with an antioxidant uniformly distributed between the layers of SARAN. SARAN is a Registered Trade Mark. This patent teaches that the antioxidant should be selected depending upon the film, the product to be contained and the light and heat conditions to which the package will be exposed.

U.S. patent No. 4,113,652 teaches that the presence of ammonium salts or water in an oxygen scavenger can lengthen the period before the oxygen scavenger becomes effective. Increasing the amount of water or ammonium salts in the oxygen scavenger will extend its period of latency. This patent only teaches a period of latency up to fifty hours. As will be appreciated when the present disclosure is fully understood, such a latency period is impractical from the standpoint of commercial reality for many food containers.

Various oxygen scavengers are known in the art. U.S. patent No. 2,825,651 discloses an oxygen remover system which includes hydrates, for example, an anhydrous sodium sulfite catalyzed by copper sulfate pentahydrate. Such an oxygen remover is included as a pellet inside a protective package for placement in the container head space. The problems of putting this patent into practice are pointed out in U.S. patent No. 4,113,652.

More germane to multilayer containers is U.S. Patent No. 4,041,209. This discloses an aqueous solution of a reducing sulfite salt disposed between a high barrier outer layer and a low barrier inner layer, an arrangement permitting oxygen to permeate outward from the head space, so that the solution can react with the permeated oxygen and thereby retard inward oxygen flow from the outside. This patent neither teaches nor suggests controlling or triggering the solution; triggering is an important aspect of our present invention.

From the foregoing it will be seen that a plastics structure (e.g. a container) containing a scavenger or getter to enhance its resistance to the transmission of gas such as oxygen is known from US—A—4,048,361 or US—A—3,586,514. This invention commences from such a structure and aims to devise improvements therein, inter alia to render the structure triggerable, when desired, to an oxygen-absorbing state.

In our opinion, a successful oxygen scavenger system must remain passive or inert, in order to preserve its oxygen scavenging capacity, until such time as food is sealed within the container. Containers often sit empty in warehouses for several months before use. There is a need for means by which the scavenger contained in a multilayer container will be maintained passive until such time as the oxygen scavenging activity is most beneficial. The patent literature does not cater for the need to which the invention as claimed is directed.

The present invention provides a plastics structure containing a scavenger to enhance its resistance to the transmission of oxygen therethrough, characterised by being a laminate comprising a plurality of solid polymeric layers at least one of which incorporates a dry oxygen scavenger composition, the scavenger composition being rendered capable of exhibiting a prolonged passive state in which it does not react significantly with oxygen and said composition being triggerable to an active oxygenphilic state in which it is reactive directly with oxygen, when moisture originating from the ambient environment is permitted to reach and wet the composition, the said composition being associated with a protective polymeric material in either the layer containing the composition or another layer or layers of the structure so as to be

2

selectively protectable thereby from moisture, the protective material being resistant to moisture permeation therein at ambient temperatures but having enhanced moisture permeability at elevated temperatures, e.g. above 200°F (75.6°C), so that by exposing the structure to elevated temperatures and moisture, for instance under retorting conditions, the protective material can be rendered moisture permeable to permit moisture to contact and wet the said composition and thereby trigger it from the passive to the active state.

The invention also provides a plastics structure containing a scavenger to enhance its resistance to the transmission of oxygen therethrough, characterised by comprising a solid polymeric layer which incorporates a dry oxygen scavenger composition, the scavenger composition being rendered capable of exhibiting a prolonged passive state in which it does not react significantly with oxygen and said composition being triggerable to an active oxygenphilic state in which it is reactive directly with oxygen, when moisture originating from the ambient environment is permitted to reach and wet the composition, the said polymeric layer being resistant to moisture permeation at ambient temperatures but having enhanced moisture permeability at elevated temperatures, e.g. above 200°F (75.6°C), so that by exposing the structure to elevated temperatures and moisture, for instance under retorting conditions, the protective material can be rendered moisture permeable to permit moisture to contact and wet the said composition and thereby trigger it from the passive to the active state.

The structure can be employed as an insert or chip which is simply placed in a container or package to protect the contents after activation to the oxygenphilic state. No oxygen barrier is essential in this case.

The inventive structure can also be embodied in a container which is coinjected, coextruded, blow molded or thermoformed. Such a container can have a wall including an outer olefinic layer, an oxygen barrier layer, a polymeric layer including the said composition and an innermost olefinic layer, the olefinic layers or a further layer or layer of the wall comprising the material which is substantially impermeable to moisture, for protecting the said composition at ambient temperatures, but which is permeable to moisture e.g. at retorting temperatures to enable moisture to reach and activate the said composition to its active, oxygenphilic state.

Also according to the present invention, there is provided a method of protecting an oxidisable product from degradation through oxidation in storage, characterised by the steps of (a) fashioning a container from a plastics structure having plural solid polymeric layers at least one of which incorporates a dry oxygen scavenger composition, the scavenger composition being rendered capable of exhibiting a prolonged passive state in which it does not react significantly with oxygen and said composition being triggerable to an active oxygenphilic state in which it is reactive directly with oxygen, when moisture originating from outside the structure is permitted to reach and wet the composition, the said composition being associated with a protective polymeric material in either the layer containing the composition or another layer or layers of the structure so as to be selectively protectable thereby from moisture, the protective material being resistant to moisture permeation therein at ambient temperatures but having enhanced moisture permeability at elevated temperatures, e.g. above 200°F (75.6°C), (b) filling the container with the product and hermetically sealing the container about the product, and (c) subjecting the sealed container to elevated levels of temperature and moisture, to render the protective material moisture permeable to permit moisture to contact and wet the said composition and convert it from the passive to the active state for absorbing moisture within the container.

The invention will now be explained in detail by way of example.

This invention embodies an oxygen scavenger which can be successfully activated simply and conveniently at the precise moment when its greatest need begins, and affords simple, reliable container constructions of multilayer polymeric form which are low in cost.

A composite wall construction for a polymeric container suitable for comestibles can be constructed from a plurality of layers each of which is selected to perform particular functions. The outer and inner layers are usually structural and protective layers chosen to exclude the outside elements and to contain the comestibles, respectively. Between these layers are materials designed to control the unwanted permeation of oxygen. The outermost layer which is designed to impart structural integrity to the construction, can be an olefinic thermoplastic material for its low cost, easy formability and physical characteristics. Similarly, the innermost layer also has a structural function and can likewise be fashioned from materials compatible with comestibles, low in cost and easily formed.

In between the two structural layers an oxygen barrier thermoplastic layer is located. Suitable barrier materials, may include ethylene vinyl alcohol co-polymers, such as EVAL produced by Kuraray of Osaka, Japan, Saran and like materials having low permeability with respect to the transmission of oxygen. EVAL is a Registered Trade Mark. It is advantageous to sandwich the oxygen barrier layer between a pair of outer and inner protective layers to provide a combination of packaging properties. Between the barrier layer and its neighbouring layers an adhesive material can be included to assure proper integrity between the said outer and inner layers and the barrier layer.

It is recognized that comestibles packed in for instance metal containers by conventional methods with hermetic double seamed ends will include a certain amount of head space gases and entrained oxygen, and the latter will react with some comestibles. It is desirable to keep the head space gases to a minimum, to provide reliable end closuring with hermetic seals, and also important to minimize the amount of oxyger present which can react with the container contents. Oxygen permeation into plastics containers is ar additional concern not of importance with metal can manufacture. Thus, an oxygen absorbing system to protect comestibles may be required, especially for plastics containers.

Minimizing oxidation of the comestibles will help to prevent their degradation. Changes in colour, nutritive value and flavor may be associated directly with degradation due to oxygen combining with the comestibles. In a multilayer plastics container a system to absorb oxygen is of extreme importance because, however excellent, an oxygen barrier only reduces the permeation of the oxygen into the container. A system which will absorb oxygen that passes through the barrier, and which is located between the barrier and the comestible is thus desirable. More particularly, an oxygen absorption system having a greater affinity for oxygen than the comestibles is desirable. Ideally, such a system should be capable of absorbing oxygen faster than the comestibles as well as having a stronger affinity for oxygen than the comestibles.

The oxygen absorption system should not be activated before the comestibles are packed. So, containers having an oxygen absorbing system should be capable of being made and stored with the oxygen absorbing system in a passive state until the precise time at which the oxygen absorption is required, at which time the system will be activated. Without a triggerable absorption system having passive and active states, severe depletion of its usefulness could occur during empty storage prior to packing. The benefit of any oxygen absorption system without triggering would be limited and would necessitate prompt use of the container following its manufacture. Such a limitation is impractical in connection with commercial use and procedures for hermetically packaging of comestibles.

An oxygen absorption system having a controllable chemical behaviour is desirable. One such system includes a palladium catalyst to combine hydrogen and oxygen in the container to form water. U.S. Patent No. 4,125,632 discloses a system of this type, which is triggered by flushing the container with a gas mixture including hydrogen. Such a system as this is expensive to realise due to the cost of palladium and the extra process step needed for activation.

The present invention seeks to make use of the commonly used filling and process equipment and operations, or preferably the normal retort operation after filling, to trigger an oxygen absorption system. Desirably, activation is not occasioned merely by filling the container. This system can retain its passive state until triggered, for instance, by the sterilization procedures used after packing and during processing.

The system can involve triggering by activation by the ingress of moisture through the walls of the multilayer polymeric container. This ingress may occur during packaging, processing or sterilization. Elevated temperature during packing or sterilization is a secondary variable which speeds up permeation of water into the oxygen absorber to activate it. Heating for activation is often desirable and in some cases may probably be a necessary step. More specifically, the oxygen absorber when dry is passive but upon contact with moisture resulting from normal processing it becomes activated and begins to react with oxygen.

In the past antioxidants have been added to polymeric resins to be formed into containers, and to the materials to be contained therein, to inhibit oxidation. It is also known that certain antioxidants also have an ability to react with oxygen, but usually only to a very limited extent. The differences between direct oxygen absorption and the action of typical antioxidants is relevant to the present invention, which seeks to use a direct oxygen absorber in contrast to most of the earlier work which used antioxidants such as propyl gallate, and butylated hydroxyanisole, di-tertiary-butylparacresol (see U.S. Patent No. 4,048,361). It is important to appreciate that typical antioxidants operate in a manner different from direct oxygen absorbers. More specifically, antioxidants are usually present in small percentages to terminate the degradation process of the material into which it is mixed i.e., the plastics package itself or the contents. A direct oxygen absorber as used in this invention is capable of reacting at a significant rate with a much larger amount of oxygen than antioxidants would and is also employed in relatively large concentrations. The chemical distinction is that oxygen absorbers react chemically only with oxygen and, while antioxidants may react with molecular oxygen, the primary action of an antioxidant is to interfere with the free-radical chemistry involved in oxidative degradation.

The concept of triggering is appreciated only in part by the U.S. Patent No. 2,316,804 where materials which do not have antioxidant activity when initially applied can, in the presence of elevated temperatures and organic packaging compositions, develop marked oxygen scavenging effects. These materials are inappropriate for containers formed by melt extrusion, however, since the high temperatures of manufacture would activate the oxygen absorption prematurely.

The preferred embodiment of this invention consists of five layers of thermoplastic material, the outer and inner layers being either polyolefinic or olefinic and the innermost layer being an oxygen barrier layer. Between the barrier and olefinic layers are adhesive layers to assure structural integrity. Either or both adhesive layers may include an oxygen absorbing system. Locating the oxygen absorbing system between the oxygen barrier and the comestible is preferred. A number of such absorbing systems could be used in the adhesive. The choice of system is dependent upon the particular process conditions for the container and the amount of oxygen absorption desired.

The preferred multilayer container has olefinic outer and inner layers resistant to the transmission of water vapor at room temperature, but at elevated temperature, e.g. during retorting, they permit water vapor to permeate into the oxygen absorbing system. It is the water vapor which is the triggering agent.

The patent literature discloses systems for inclusion in a package within a container, for reacting in the presence of the moisture in the food, see, for example, German Offenlegungsschrift 28 27 247 published January 4, 1979. Such disclosures recognise the potential of a wet sulfite salt for oxygen absorption. According to the German OS 28 27 247 the sulfite salt is wetted by a deliquescent salt with which it is mixed. This patent document teaches the use of an at least three component scavenging composition. The document does not recognise nor suggest that potassium sulfite is itself a deliquescent substance. However, the necessary water is introduced by either using the hydrated form of the salt or by contact with water in the food. There is no specific teaching of triggering by the controlled application of water to activate the oxygen absorber, nor any appreciation of the discovery that the water vapor permeability of a container wall protecting the sulfite salt can become 1,000 times greater by raising its temperature from 70° to 250°F, (21° to 121°C) as is the situation when polyethylene and polypropylene are used as the inner and outer layers. Moreover, such disclosures do not teach that other temperature ranges or process conditions will achieve triggering with other structural layer resins.

The structures according to the present invention contain compositions which become oxygenphilic and react with oxygen when they have dissolved by absorbing permeated water vapor. Some water-soluble salts can become highly oxygenphilic in this deliquescent state. A deliquescent state as used herein refers to the condition of chemicals which are either in the process of dissolving, or have dissolved, by absorption of moisture vapor. While almost all inorganic salts deliquesce when the relative humidity approaches 100%, this invention is best practiced with chemicals (called deliquescent salts) which deliquesce at lower humidities, i.e. below about 85%.

A deliquescent composition consists of at least one deliquescent salt and a material which absorbs oxygen when wetted. Deliquescence and oxygen absorption may both be properties of a salt, as in the case of potassium sulfite; alternatively these properties may be supported by an interacting mixture of salts such as potassium acetate and sodium sulfite. A dry composition in the container wall can come to a deliquescent state when water vapor permeates through during the retorting stage. Afterwards the moisture is trapped by the walls because their ability then to transmit moisture falls a thousand fold upon cooling. The triggering is, therefore accomplished by this combination.

Potassium sulfite is an excellent material to use in this invention as an oxygen absorber because of its deliquescence and its oxygenphilic character is exhibited only in the wet state. Potassium sulfite may be used alone or with other deliquescent salts, especially those which deliquesce at lower relative humidities to influence the triggering time. There is no problem in using potassium sulfite in connection with food containers as potassium sulfite is an approved food additive (by the FDA for instance).

The invention can be practised in the manufacture of multilayer polymeric containers by injection or extrusion molding techniques or by thermoforming. Such plastic multi-layer containers can then be sold to food and beverage packers without concern that the oxygen absorption system will be degraded during the time between manufacture and use. More specifically, the preferred structure has an olefinic layer protecting the oxygen absorber from moisture so that it will not become highly oxygenphilic until it is retort processed. Packing a wet comestible in a container of the preferred construction and design will result in a gradual triggering of the oxygen absorption system. Potassium sulfite is particularly well suited for use as an oxygen scavenger because it can be readily triggered by the retort process and has enough thermal stability to permit its use in thermoplastic processes such as injection molding.

To test the triggering mechanism for oxygen absorption a number of square plaques having five layers were assembled. Such a plaque was made as follows. The outer layers were cut from a 15 mil (0.38 mm) thick polyolefin sheet which was a 50:50 melt blend of polyethylene and polypropylene. The central layer was a 2 mil (0.05 mm) sheet of ethylene vinyl alcohol co-polymer (GLD; as sold by Nippon Goshei Co., Ltd., Japan). The interleaving adhesive layers were a modified polyolefin (Plexar; as sold by Chemplex Inc., Rolling Meadows, Illinois) into which was melt compounded finely divided potassium sulfite at a loading of 20% by weight. These adhesive sheets were about 2 mil (0.05 mm) thick. The separate layers were stacked and then melt-pressed together to form an integral plaque in which the outer olefin sheets come together only at the edges to completely protect the innermost layers from ambient moisture. A further set of plaques were made in which di-sodium phosphate was substituted for potassium sulfite in the adhesive layer. Because di-sodium phosphate does not absorb oxygen these latter plaques were used as a control.

The plaques were autoclaved at 250°F (121°C) for different periods of time and were then analyzed on a MoCon oxygen permeability tester. In this instrument both sides of the plaques can be purged with nitrogen gas. The gas stream from the lower side is passed over an oxygen detector. Under perfect conditions the reading from this detector should be zero; in practice leaks cause a small reading, known as the baseline. Plaques which contain an active oxygen scavenger depress the baseline because the leaked oxygen is absorbed. This technique can be used to identify those plaques which are absorbing oxygen. Table 1 compares values obtained under nitrogen gas purge for unretorted and retorted plaques.

TABLE 1

| Agent in adhesive layer | K$_2$SO$_3$ | | | | | | | | Na$_2$HPO$_4$ | |
|---|---|---|---|---|---|---|---|---|---|---|
| Autoclaving time (mins) | 0 | 0 | 30 | 30 | 45 | 45 | 60 | 60 | 120 | 120 |
| Baseline reading (mV) | .03 | .03 | .02 | .03 | .02 | .02 | .02 | .02 | .03 | .03 |

The results indicate that 30 minutes autoclaving is the borderline requirement to start the oxygen absorption with this composition while autoclaving for 45 minutes triggers it.

For further testing, cylindrical-sided containers were thermoformed from multilayer co-extruded sheet. These containers had a diameter of 4 1/16″ and a depth of 4 7/16″ (10.3×11.6 cms). The body of the container consisted of six layers. The oxygen scavenger K$_2$SO$_3$ was mixed in a carrier material comprising high density polyethylene (HDPE) which was placed next to the inner polyolefin layer. The latter was a 50:50 melt blend of high density polyethylene (HDPE) and polypropylene (PP) structural layer. The multilayer structure of the container, from the inner surface to the outer surface, was as follows: 12 mil (0.30 mm) HDPE-PP/4 mil (0.10 mm) HDPE with 30% (by weight) K$_2$SO$_3$/1 mil (0.02 mm) Plexar/2 mil (0.05 mm) EVAL/1 mil (0.02 mm) Plexar/12 mil (0.30 mm) HDPE-PP blend. PLEXAR is a Registered Trade Mark. EVAL is an ethylene vinyl alcohol co-polymer made by Kuraray Chemical Co., Ltd., Japan. A group of five layer containers omitting the K$_2$SO$_3$ layer were also prepared for control purposes. The layer composition for these controls was: 15 mil (0.38 mm) HDPE-PP/1 mil (0.02 mm) Plexar/2 mil (0.05 mm) EVAL/1 mil (0.02 mm) Plexar/15 mil (0.38 mm) HDPE-PP. The containers were filled with hot water (160°F, 71°C) and double seamed with metal lids containing two small rubber grommets. The head space between water in the containers and the lids was approximately 6/32 inch (4.76 mm) high.

At given storage times after retorting (at 250°F, 121°C) or hot filling (at 160°F, 71°C), a sample of head space gas was extracted through a grommet and analyzed for oxygen and nitrogen using gas chromatography. The oxygen concentrations in the head space (measured as a ratio of oxygen to oxygen plus nitrogen) are shown in Table 2. The concentration in the hot-filled but unautoclaved container is less than that of air (.21) because, as the hot water cools, its increased affinity for oxygen lowers the O$_2$ concentration in the head space.

Thus, it is clear that the autoclaved containers are triggered to absorb oxygen, since their head space oxygen levels fall as time passes while that of the unautoclaved container is steady with time. This further demonstrates the efficacy of the system for triggered oxygen absorption.

TABLE 2*

| Process | Oxygen absorbing agent | .02 | .04 | .75 | 1 | 3 | 5 | 6 | 10 | 14 | 18 | 20 | 28 |
|---|---|---|---|---|---|---|---|---|---|---|---|---|---|
| Hot fill | None | | | .19 | | | | .18 | | .18 | | | .18 |
| Hot fill | K$_2$SO$_3$ | | | .2 | | | | .19 | | .19 | | | .18 |
| Autoclave, 30 Min | K$_2$SO$_3$ | | .18 | | .15 | | | .13 | | .08 | | .06 | .05 |
| Autoclave, 2 hr | K$_2$SO$_3$ | .165 | | | | .11 | .08 | | .045 | | .022 | | |

* The numbers in the Table are oxygen concentrations in the head spaces.

TABLE 2A
O$_2$ Content cm$^3$

| | Initial | 3 months |
|---|---|---|
| No additives | 10 | 34 |
| K$_2$SO$_3$ | 11 | 8 |

Table 2A shows data accumulated over a three-month period for containers retorted at 250°F (121°C) for two hours with results reported in Table 2 for the containers with K$_2$SO$_3$. These containers had been packed and retort processed with water and then stored for eighteen days. After this they were emptied and filled with 10 cc of water to maintain 100% relative humidity inside them. The head space above the water was filled with about 99% nitrogen and 1% oxygen. So filled and sealed, the containers were stored for 3 months in an environment comprising 100% oxygen at atmospheric pressure and 75% RH. For control purposes, a container without additives had the same processing and storage conditions. From Table 2A it is apparent that the $K_2SO_3$ scavenged container not only prevented permeation but also absorbed 3 cc of oxygen from the head space. The container without scavenger allowed 24 cc of oxygen to permeate into the container. The decrease of oxygen concentration in the head space over the three month period conclusively demonstrates the scavenging effect of $K_2SO_3$.

While the containers embodying the invention as described above have a six layer structure, it may be preferred to employ fewer layers. For example, a five layer structure can be adopted wherein the potassium sulfite has been mixed into an adhesive layer. The system disclosed in detail above shows a prolonged passive state which, thanks to its deliquescent behaviour, changes abruptly into its active oxygenphilic state. Other systems may have a less prolonged passive state and can also be exploited provided processing can be made to trigger a large change in the activity of the oxygenphilic state.

One system which after triggering by water is an effective oxygen scavenger is a mixture of a heat treated gelatin and a strong alkali. Ordinarily, gelatin will not scavenge oxygen, but it will do so after a heat treatment, either alone or in the presence of the alkali, at above 300°F (149°C) for more than 5 mins.

The following examples illustrate the effectiveness of this system. The composition used for the examples is 10% (by weight) Type A gelatin and 20% (by weight) NaOH in a 70% (by weight) carrier consisting of Plexar. The said composition was blended together in a Brabender mixing head at 400°F (204°C) for 20 minutes, and then pressed into approximately 2 mil thick films.

The film is capable of rapidly scavenging 170 cc oxygen per gram of gelatin when the film is saturated with moisture. One of the conditions adequate for saturating said composition is to retort the bare film at 250°F (121°C) for 2 hours.

The oxygen scavenging rate is extremely slow if the film of this gelatin composition is protected by a moisture barrier to reduce moisture penetration into the said composition. The following table illustrates the unretorted oxygen scavenging rate of the film of the gelatin composition protected by a 15 mil (0.38 mm) HDPE layer (moisture barrier layer) on both sides.

### TABLE 3
### cc $O_2$ Scavenged per gram of gelatin

| | (73°F 22.8°C) | | |
|---|---|---|---|
| Storage time | 37 Days | 58 Days | 108 Days |
| Storage RH | | | |
| 44% | 0 | 6 | 8 |
| 75% | 0 | 10 | 41 |
| 100% | 9 | 24 | 61 |

It is apparent that the $O_2$ scavenging rate of the said composition can be controlled by the moisture protective layer and the storage conditions. Absorption will take place after the materials are exposed to moist air for prolonged periods of time. This shows that while retorting gives an immediate triggering, it is also possible to obtain triggering without retorting.

The gelatin containing system is effective as an oxygen scavenger but produces unpleasant odors when exposed to elevated temperatures for prolonged periods of time. Where containers are to be made by melt processing plastics (containing the present oxygen scavenger systems), it is preferred to use a thermally stable system such as potassium sulfite as the oxygen scavenger.

The constructions described above have had the oxygen barrier layer at or near the center of the laminate, flanked on either side by a structural (polyolefin) layer. There are alternative constructions which will perform satisfactorily, and are within the framework of this approach. One example is a multilayer structure with thin layers of an oxygen barrier on the outside. The bulk of the sidewall would be a structural plastics layer in which an oxygen scavenger is embedded. The structural layer serves as the means to protect the oxygen scavenger lying within the structural layer from premature triggering, though a fractional amount of the oxygen scavenger near the surface of the structural layer may be triggered before product is packaged. Such a can or package could be made with a polyolefin wall containing a potassium sulfite dispersion and a Saran or epoxy coating on the outside. Although outer oxygen barrier layers are preferred they can be omitted or replaced by pure polyolefin. In this case more scavenger would need to be embedded in its host or structural layer. Finally, a chip instead of a pellet or package of powder, could be used by placing it within a sealed container. An advantage of integral constructions is that they avoid the problem of packages of dry powder rupturing and contaminating the packed product. The chip could be of any of the recited constructions, the choice depending on the application.

7

**0 083 826**

While a preferred system has been shown and described it should be appreciated that there are many other deliquescent compositions and polymeric materials which will, when used in combination, exhibit the requisite triggering ability to an oxygenphilic state and hence permit the successful application of the mixture to packaging for the commercial processing of comestibles.

Multilayer structures comprising an oxygen barrier associated on at least one side thereof with a structural layer embodying an activatable oxygen scavenger can be of flexible or rigid character. Flexible structures can be used to fashion sachet or bag type food packages, while rigid structures can be used to produce plastics containers for instance having the familiar shapes associated generally with food or beverage cans.

**Claims**

1. A plastics structure containing a scavenger to enhance its resistance to the transmission of oxygen therethrough, characterised by being a laminate comprising a plurality of solid polymeric layers at least one of which incorporates a dry oxygen scavenger composition, the scavenger composition being rendered capable of exhibiting a prolonged passive state in which it does not react significantly with oxygen and said composition being triggerable to an active oxygenphilic state in which it is reactive directly with oxygen, when moisture originating from the ambient environment is permitted to reach and wet the composition, the said composition being associated with a protective polymeric material in either the layer containing the composition or another layer or layers of the structure so as to be selectively protectable thereby from moisture, the protective material being resistant to moisture permeation therein at ambient temperatures but having enhanced moisture permeability at elevated temperatures, e.g. above 200°F (75.6°C), so that by exposing the structure to elevated temperatures and moisture, for instance under retorting conditions, the protective material can be rendered moisture permeable to permit moisture to contact and wet the said composition and thereby trigger it from the passive to the active state.

2. A plastics structure according to claim 1, characterised in that the protective material is substantially impermeable to moisture at temperatures below 100°F (37.8°C).

3. A plastics structure according to claim 1 or claim 2, characterised in that the scavenger-containing layer is disposed between two layers of the said protective material.

4. A plastics structure according to claim 1 or claim 2, further characterised by the presence of at least one barrier layer which is an oxygen barrier polymer such as ethylene-vinyl alcohol copolymer.

5. A plastics structure according to claim 4, characterised in that the protective material forms the layer which incorporates the scavenger composition, and oxygen barrier layers are disposed one on either side thereof.

6. A plastics structure according to claim 4, characterised by the scavenger-containing layer being disposed on one side of the oxygen barrier layer and another polymeric layer, e.g. of said protective material, being disposed on the other side of the barrier layer.

7. A plastics structure according to claim 4, characterised by comprising an oxygen barrier layer laminated to a layer of said protective material with the scavenger-containing layer therebetween, the latter layer for example comprising an adhesive polymer.

8. A plastics structure according to claim 7, characterised by a second layer of protective material disposed on the opposite side of the oxygen barrier layer from the scavenger-containing layer.

9. A plastics structure according to claim 8, characterised by a further layer disposed between the oxygen barrier layer and the second protective material layer, the further layer for example comprising an adhesive polymer and the further layer optionally incorporating an oxygen scavenger composition therein.

10. A plastics structure according to claim 4, characterised by an oxygen barrier layer being sandwiched between two layers of the protective material which is, for example, a polyolefinic or olefinic material, and between the barrier layer and each of the protective material layers is a polymeric adhesive layer, either or both the adhesive layers incorporating said oxygen scavenging composition.

11. A plastics structure according to claim 4, characterised by an oxygen barrier layer being sandwiched between first and second layers of the protective material, a layer of polymeric adhesive being adhered to each side of the barrier layer and adhering said layer (a) to the first protective material layer and (b) to the scavenger-containing layer which is located between the barrier layer and the second protective material layer.

12. A plastics structure according to any of claims 1 to 11, characterised in that the said protective material is an olefinic polymer or copolymer, for example a melt blend of polyethylene and polypropylene in substantially equal proportions by weight.

13. A plastics structure according to any of claims 1 to 12, wherein the said composition contains a deliquescent substance which becomes oxygenphilic when in a deliquescent state.

14. A plastics structure according to claim 13, wherein the said composition contains a sulfite salt such as potassium sulfite.

15. A plastics structure according to any of claims 1 to 12, characterised by the said composition being a blend of an alkali e.g. sodium hydroxide and gelatin, wherein the gelatin has been heat treated in the presence or absence of the alkali.

16. A plastics structure according to claim 15, wherein the heat treatment consists of raising the

8

temperature of the gelatin alone, or the blend with the alkali, to greater than 300°F (149°C) for more than 5 minutes.

17. A plastics structure containing a scavenger to enhance its resistance to the transmission of oxygen therethrough, characterised by comprising a solid polymeric layer which incorporates a dry oxygen scavenger composition, the scavenger composition being rendered capable of exhibiting a prolonged passive state in which it does not react significantly with oxygen and said composition being triggerable to an active oxygenphilic state in which it is reactive directly with oxygen, when moisture originating from the ambient environment is permitted to reach and wet the composition, the said polymeric layer being resistant to moisture permeation at ambient temperatures but having enhanced moisture permeability at elevated temperatures, e.g. above 200°F (75.6°C), so that by exposing the structure to elevated temperatures and moisture, for instance under retorting conditions, the protective material can be rendered moisture permeable to permit moisture to contact and wet the said composition and thereby trigger it from the passive to the active state.

18. A plastics structure according to any preceding claim, characterised by being in the form of a polymeric chip for inclusion in a sealed package for absorbing oxygen therein.

19. A container having a wall comprising the structure claimed in any of claims 1 to 17, said container e.g. being produced by a coextrusion, a coinjection or a thermoforming process.

20. A method of protecting an oxidisable product from degradation through oxidation in storage, characterised by the steps of (a) fashioning a container from a plastics structure having plural solid polymeric layers at least one of which incorporates a dry oxygen scavenger composition, the scavenger composition being rendered capable of exhibiting a prolonged passive state in which it does not react significantly with oxygen and said composition being triggerable to an active oxygenphilic state in which it is reactive directly with oxygen, when moisture originating from outside the structure is permitted to reach and wet the composition, the said composition being associated with a protective polymeric material in either the layer containing the composition or another layer or layers of the structure so as to be selectively protectable thereby from moisture, the protective material being resistant to moisture permeation therein at ambient temperatures but having enhanced moisture permeability at elevated temperatures, e.g. above 200°F (75.6°C), (b) filling the container with the product and hermetically sealing the container about the product, and (c) subjecting the sealed container to elevated levels of temperature and moisture, to render the protective material moisture permeable to permit moisture to contact and wet the said composition and convert it from the passive to the active state for absorbing moisture within the container.

21. A method according to claim 20, characterised in that the last step is performed by a high temperature sterilization process, the product being a comestible.

**Patentansprüche**

1. Kunststoffstruktur mit einem Desoxidationsmittel zum Erhöhen seines Widerstands gegen Sauerstoff-Durchtritt, dadurch gekennzeichnet, daß die Struktur ein mehrere feste polymere Schichten aufweisendes Laminat ist, wobei zumindest eine Schicht eine trockene Sauerstoff abfangende Zusammensetzung beinhaltet, die fähig ist, einen passiven Zustand längere Zeit beizubehalten, in dem sie nicht signifikant mit Sauerstoff reagiert, aber in einen Sauerstoff aufnehmenden Zustand bringbar ist, in welchem sie direkt mit Sauerstoff reagiert, wenn es aus der benachbarten Umgebung stammender Feuchtigkeit ermöglicht wird, die Sauerstoff abfangende Zusammensetzung zu erreichen und zu befeuchten, wobei die Zusammensetzung mit einem polymeren Schutzmaterial verbunden ist, das entweder in der die Zusammensetzung enthaltenden Schicht oder in einer oder mehreren anderen Schicht(en) der Struktur enthalten ist, um dadurch beliebig vor Feuchtigkeit schützbar zu sein, und wobei das Schutzmaterial bei Umgebungstemperatur resistent gegen Feuchtigkeitspermeation ist, jedoch eine erhöhte Feuchtigkeitspermeabilität bei erhöhter Temperatur, z.B. über 93,3°C (200°F) besitzt, so daß das Schutzmaterial, wenn die Struktur höheren Temperaturen und Feuchtigkeit ausgesetzt wird, z.B. bei Retortenbedingungen feuchtigkeitspermeabel wird, um es der Feuchtigkeit zu gestatten, mit der Zusammensetzung in Kontakt zu kommen und sie zu befeuchten, und sie dadurch aus dem passiven in den aktiven Zustand überzuführen.

2. Kunststoffstruktur nach Anspruch 1, dadurch gekennzeichnet, daß das Schutzmaterial bei Temperaturen unter 37,8°C (100°F) für Feuchtigkeit im wesentlichen undurchlässig ist.

3. Kunststoffstruktur nach Anspruch 1 oder 2, dadurch gekennzeichnet, daß die die Sauerstoff-abfangende Zusammensetzung enthaltende Schicht zwischen zwei Schichten Schutzmaterial angeordnet ist.

4. Kunststoffstruktur nach Anspruch 1 oder 2, gekennzeichnet durch die Gegenwart zumindest einer Sperrschicht, die ein Sauerstoffsperr-Polymer, wie beispielsweise Ethylenvinylalkohol-Copolymer, ist.

5. Kunststoffstruktur nach Anspruch 4, dadurch gekennzeichnet, daß das Schutzmaterial eine Schicht bildet, die die Sauerstoff-abfangende Zusammensetzung aufweist und jeweils eine Sauerstoffschicht beidseitig angeordnet ist.

6. Kunststoffstruktur nach Anspruch 4, dadurch gekennzeichnet, daß die die Sauerstoff-abfangende Zusammensetzung enthaltende Schicht auf einer Seite der Sauerstoffschicht angeordnet ist, während eine weitere polymere Schicht, z.B. aus dem Schutzmaterial, auf der anderen Seite der Sperrschicht angeordnet ist.

7. Kunststoffstruktur nach Anspruch 4, dadurch gekennzeichnet, daß auf einer Shutzmaterialschicht auflaminierte Sauerstoffsperrschicht vorgesehen ist, wobei zwischen beiden die die Sauerstoff abfangende Zusammensetzung enthaltende Schicht angeordnet ist, wobei letztere beispielsweise ein adhäsivers Polymer aufweist.

8. Kunststoffstruktur nach Anspruch 7, gekennzeichnet durch eine zweite Schutzmaterialschicht, die auf der Sauerstoffsperrschicht auf der Sauerstoff-abfangenden Zusammensetzung enthaltenden Schicht gegenüberliegenden Seite angeordnet ist.

9. Kunststoffstruktur nach Anspruch 6, gekennzeichnet durch eine weitere, zwischen der Sauerstoffsperrschicht und der zweiten Schutzmaterialschicht angeordnete Schicht, wobei die weitere Schicht beispielsweise ein adhäsives Polymer und wahlweise eine Sauerstoff-abfangende Zusammensetzung aufweist.

10. Kunststoffstruktur nach Anspruch 4, gekennzeichnet durch eine Sauerstoffsperrschicht, die sandwichartig zwischen zwei Schutzmaterialschichten angeordnet ist, und welche z.B. ein polyolefinisches oder olefinisches Material ist, wobei zwischen der Sperrschicht und jeder der Schutzmaterialschichten eine polymere adhäsive Schicht vorgesehen ist, und entweder eine oder beide adhäsiven Schichten die Sauerstoff-abfangende Zusammensetzung enthält(en).

11. Kunststoffstruktur nach Anspruch 4, dadurch gekennzeichnet, daß zwischen einer ersten und einer zweiten Schutzmaterialschicht eine Sauerstoffsperrschicht sanwichartig angeordnet ist, wobei eine polymere adhäsive Schicht beidseitig an der Sperrschicht angeklebt ist und die Schicht (a) mit der ersten Schutzmaterialschicht und (b) mit der die Sauerstoff-abfangende Zusammensetzung enthaltenden, zwischen der Sperrschicht und der zweiten Schutzschicht angeordneten Schicht, verbindet.

12. Kunststoffstruktur nach mindestens einem der Ansprüche 1 bis 11, dadurch gekennzeichnet, daß das Schutzmaterial ein olefinisches Polymer oder Copolymer ist, beispielsweise eine in der Schmelze hergestelle Mischung im wesentlichen gleicher Gewichtsteile Polyethylen und Polypropylen.

13. Kunststoffstruktur nach mindestens einem der Ansprüche 1 bis 12, dadurch gekennzeichnet, daß die Sauerstoff-abfangende Zusammensetzung eine verfließende Substanz beinhaltet, die im geschmolzenen Zustand Sauerstoff-aufnehmend wird.

14. Kunststoffstruktur nach Anspruch 13, dadurch gekennzeichnet, daß die Sauerstoff-abfangende Zusammensetzung ein Sulfitsalz, wie beispielsweise Kaliumsulfit, enthält.

15. Kunststoffstruktur nach mindestens einem der Ansprüche 1 bis 12, dadurch gekennzeichnet, daß die Sauerstoff-abfangende Zusammensetzung eine Mischung eines Alkali, z.B. Natriumhydroxid und Gelatine ist, wobei die Gelatine in Gegenwart oder bei Abwesenheit des Alkali wärmebehandelt wurde.

16. Kunststoffstruktur nach Anspruch 15, dadurch gekennzeichnet, daß die Wärmebehandlung aus einer Temperaturerhöhung der Gelatine alleine oder der Mischung mit Alkali auf mehr als 149°C (300°F) über mehr als 5 Minuten besteht.

17. Kunststoffstruktur mit einem Desoxidationsmittel zum Erhöhen ihres Widerstandes gegen Sauerstoff-Durchtritt, dadurch gekennzeichnet, daß eine feste polymere Schicht vorgesehen ist, die eine trockene, Sauerstoff-abfangende Zusammensetzung beinhaltet, die fähig ist, einen längeren passiven Zustand bezubehalten, in dem sie nicht signifikant mit Sauerstoff reagiert, wenn es aus der benachbarten Umgebung stammender Feuchtigkeit ermöglicht wird, die Sauerstoff-abfangende Zusammensetzung zu erreichen und zu befeuchten, wobei die polymere Schicht bei Umgebungstemperatur nicht feuchtigkeitspermeabel ist, aber eine erhöhte Feuchtigkeitspermeabilität bei erhöhten Temperaturen, z.B. über 93,3°C (200°F) besitzt, so daß das schützende Material dadurch feuchtigkeitsdurchlässig gemacht werden kann, daß es erhöhten Temperaturen und Feuchtigkeit, beispielsweise unter Retorten-Bedingungen ausgesetzt wird, um es der Feuchtigkeit zu ermöglichen, mit der Sauerstoff-abfangenden Zusammensetzung in Kontakt zu kommen und sie zu befeuchten, um sie dadurch aus dem passiven in den aktiven Zustand überzuführen.

18. Kunststoffstruktur nach mindestens einem der vorangegangenen Ansprüche, dadurch gekennzeichnet, daß sie in Form eines polymeren Chips zum Einschluß in einer Siegelverpackung zur Sauerstoff-Absorption in dieser vorliegt.

19. Behälter mit einer Wandung, die eine Struktur aufweist, wie sie in einem der Ansprüche 1 bis 17 beansprucht wurde, dadurch gekennzeichnet, daß der Behälter durch ein Koextrusions-, durch ein Kojektions- oder durch ein Warmformverfahren hergestellt ist.

20. Verfahren zum Schützen oxidierbarer Produkte vor Abbau während der Lagerung durch Oxidation, gekennzeichnet durch die folgenden Schritte:
a) Ausbilden eines Behälters aus einer Kunststoffstruktur mit mehreren polymeren Schichten, von denen zumindest eine eine trockene Sauerstoff-abfangende Zusammensetzung beinhaltet, die fähig ist, einen längeren passiven Zustand beizubehalten, während welchem sie nicht signifikant mit Sauerstoff aufnehmenden Zustand bringbar ist, in welchem sie direkt mit Sauerstoff reagiert, wenn es Feuchtigkeit von außerhalb der Struktur ermöglicht wird, die Sauerstoffabfangende Zusammensetzung zu erreichen und zu befeuchten, wobei die Sauerstoff-abfangende Zusammensetzung mit einem polymeren Schutzmaterial entweder in der die Sauerstoff-abfangende Zusammensetzung enthaltenden Schicht oder in einer oder in mehreren anderen Schichten der Struktur enthalten ist, verbunden ist, um sie dadurch wahlweise

10

vor Feuchtigkeit schützbar zu machen, und wobei das Schutzmaterial bei Umgebungstemperatur das Eindringen von Feuchtigkeit verhindert, jedoch eine erhöhte Feuchtigkeitspermeabilität bei erhöhter Temperatur, z.B. 93,3°C (200°F) besitzt,

b) Füllen des Behälters mit dem Produkt und hermetisches Versiegeln des Behälters um das Produkt, und

c) Behandeln des versiegelten Behälters mit erhöhten Temperaturen und Feuchtigkeit, damit das Schutzmaterial feuchtigkeitspermeabel wird, um es der Feuchtigkeit zu gestatten, in Kontakt mit der Sauerstoff-abfangenden Zusammensetzung zu kommen, sie zu befeuchten und um sie zum Aussorbieren der Feuchtigkeit innerhalb des Containers aus dem passiven in den aktiven Zustand überzuführen.

21. Verfahren nach Anspruch 20, dadurch gekennzeichnet, daß der letzte Schritt durch einen Hochtemperatursterilisationsprozeß durchgeführt wird, wobei das Produkt ein Lebensmittel ist.

**Revendications**

1. Structure en matière plastique comprenant un désoxygénant destiné à améliorer sa résistance à la transmission d'oxygène à travers elle, caractérisée en ce qu'elle est constituée d'un stratifié comprenant plusieurs couches polymériques pleines dont au moins une contient une composition désoxygénante sèche, la composition désoxygénante étant rendue capable de présenter un état passif prolongé dans lequel elle ne réagit pas notablement avec l'oxygène et ladite composition pouvant être déclenchée pour prendre un état oxygénophile actif dans lequel elle réagit directement avec l'oxygène lorsque de l'humidité provenant de l'environnement ambiant est autorisée à atteindre et mouiller la composition, ladite composition étant associée à une matière polymérique protectrice soit dans la couche contenant la composition, soit dans une autre ou plusieurs autres couches de la structure afin de pouvoir être ainsi protégée sélectivement de l'humidité, la matière protectrice étant résistante à la perméation de l'humidité dans cette matière à des températures ambiantes, mais ayant une perméabilité accrue à l'humidité à des températures élevées, par exemple au-dessus de 75,6°C (200°F), de sorte qu'en exposant la structure à des températures élevées et à de l'humidité, par exemple dans des conditions de pyrogénation, la matière protectrice puisse être rendue perméable à l'humidité pour permettre à l'humidité d'entrer en contact avec ladite composition et de la mouiller et de déclencher ainsi son passage de l'état passif à l'état actif.

2. Structure en matière plastique selon la revendication 1, caractérisée en ce que la matière protectrice est sensiblement imperméable à l'humidité à des températures inférieures à 37,8°C (100°F).

3. Structure en matière plastique selon la revendication 1 ou la revendication 2, caractérisée en ce que la couche contenant un désoxygénant est disposée entre deux couches de ladite matière protectrice.

4. Structure en matière plastique selon la revendication 1 ou la revendication 2, caractérisée en outre par la présence d'au moins une couche d'arrêt qui est un polymère d'arrêt de l'oxygène tel qu'un copolymère éthylène-alcool vinylique.

5. Structure en matière plastique selon la revendication 4, caractérisée en ce que la matière protectrice forme la couche qui contient la composition désoxygénante, et des couches d'arrêt de l'oxygène sont disposées chacune sur l'une de ses faces.

6. Structure en matière plastique selon la revendication 4, caractérisée en ce que la couche contenant le désoxygénant est disposée sur une première face de la couche d'arrêt de l'oxygène et une autre couche polymérique, par exemple ladite matière protectrice, est disposée sur l'autre face de la couche d'arrêt.

7. Structure en matière plastique selon la revendication 4, caractérisée en ce qu'elle comprend une couche d'arrêt de l'oxygène stratifiée sur une couche de ladite matière protectrice, la couche contenant le désoxygénant étant placée entre elles, la dernière couche comprenant, par exemple, un polymère adhésif.

8. Structure en matière plastique selon la revendication 7, caractérisée par une seconde couche de matière protectrice disposée sur la face de la couche d'arrêt de l'oxygène opposée à celle portant la couche contenant le désoxygénant.

9. Structure en matière plastique selon la revendication 8, caractérisée par une autre couche disposée entre la couche d'arrêt de l'oxygène et la seconde couche de matière protectrice, l'autre couche comprenant, par exemple, un polymère adhésif et l'autre couche contenant facultativement une composition désoxygénante.

10. Structure en matière plastique selon la revendication 4, caractérisée par une couche d'arrêt de l'oxygène prise en sandwich entre deux couches de la matière protectrice qui est, par exemple, une matière polyoléfinique ou oléfinique, et une couche d'adhésif polymérique est disposée entre la couche d'arrêt et chacune des couches de matière protectrice, l'une des couches adhésives ou les deux couches adhésives contenant ladite composition désoxygénante.

11. Structure en matière plastique selon la revendication 4, caractérisée par une couche d'arrêt de l'oxygène prise en sandwich entre des première et seconde couches de la matière protectrice, une couche d'adhésif polymérique étant collée à chaque face de la couche d'arrêt et collant·ladite couche (a) à la première couche de matière protectrice et (b) à la couche contenant le désoxygénant qui est placée entre la couche d'arrêt et la seconde couche de matière protectrice.

12. Structure en matière plastique selon l'une quelconque des revendications 1 à 11, caractérisée en ce que ladite matière protectrice est un polymère ou un copolymère oléfinique, par exemple un mélange fondu de polyéthylène et de polypropylène en proportions sensiblement égales, en poids.

13. Structure en matière plastique selon l'une quelconque des revendications 1 à 12, dans laquelle ladite composition contient une substance déliquescente qui devient oxygénophile lorsqu'elle est dans un état déliquescent.

14. Structure en matière plastique selon la revendication 13, dans laquelle ladite composition contient un sel du type sulfite tel que du sulfite de potassium.

15. Structure en matière plastique selon l'une quelconque des revendications 1 à 12, caractérisée en ce que ladite composition est un mélange d'une substance alcaline, par exemple de l'hydroxyde de sodium et de gélatine, dans lequel la gélatine a été soumise à un traitement thermique en présence ou en l'absence de la substance alcaline.

16. Structure en matière plastique selon la revendication 15, dans laquelle le traitement thermique consiste à élever la température de la gélatine seule, ou du mélange avec la substance alcaline, à plus de 149°C (300°F) pendant plus de 5 minutes.

17. Structure en matière plastique contenant un désoxygénant pour améliorer sa résistance à la transmission d'oxygène à travers elle, caractérisée en ce qu'elle comprend une couche polymérique pleine qui contient une composition désoxygénante sèche, la composition désoxygénante étant rendue capable de présenter un état passif prolongé dans lequel elle ne réagit pas notablement avec l'oxygène et ladite composition pouvant être amenée par déclenchement à un état oxygénophile actif dans lequel elle réagit directement avec l'oxygène lorsque de l'humidité provenant de l'environnement ambiant est autorisée à atteindre et à mouiller la composition, ladite couche polymérique étant résistance à la perméation de l'humidité aux températures ambiantes, mais ayant une perméabilité accrue à l'humidité à des températures élevées par exemple au-dessus de 75,6°C (200°F), de sorte qu'en exposant la structure à des températures élevées et à l'humidité, par exemple dans des conditions de pyrogénation, la matière protectrice puisse être rendue perméable à l'humidité pour permettre à l'humidité d'entrer en contact avec ladite composition et de la mouiller et de déclencher ainsi son passage de l'état passif à l'état actif.

18. Structure en matière plastique selon l'une quelconque des revendications précédentes, caractérisée en ce qu'elle se présente sous la forme d'une pastille polymérique destinée à être incluse dans un emballage fermé hermétiquement pour y absorber l'oxygène.

19. Récipient comportant une paroi comprenant la structure selon l'une quelconque des revendications 1 à 17, ledit récipient étant produit, par exemple, par un procédé de coextrusion, de co-injection ou de thermoformage.

20. Procédé pour protéger un produit oxydable d'une dégradation par oxydation en cours de stockage, caractérisé par les étapes qui consistent (a) à façonner un récipient à partir d'une structure en matière plastique comportant plusieurs couches polymériques pleines dont au moins l'une contient une composition désoxygénante sèche, la composition désoxygénante étant rendue capable de présenter un état passif prolongé dans lequel elle ne réagit pas notablement avec l'oxygène et ladite composition pouvant être déclenchée pour passer dans un état oxygénophile actif dans lequel elle réagit directement avec l'oxygène lorsque de l'humidité provenant de l'extérieur de la structure est autorisée à atteindre et mouiller la composition, ladite composition étant associée à une matière polymérique protectrice soit dans la couche contenant la composition, soit dans une autre ou plusieurs autres couches de la structure afin de pouvoir être ainsi protégée sélectivement de l'humidité, la matière protectrice étant résistante à une perméation de l'humidité aux températures ambiantes mais ayant une perméabilité accrue à l'humidité à des températures élevées, par exemple au-dessus de 75,6°C (200°F), (b) à remplir le récipient du produit et à fermer hermétiquement le récipient autour du produit, et (c) à soumettre le récipient formé hermétiquement à des niveaux élevés de température et d'humidité afin de rendre perméable à l'humidité la matière protectrice pour permettre à l'humidité d'entrer en contact avec ladite composition et de la mouiller et de la convertir de l'état passif à l'état actif pour absorber l'humidité à l'intérieur du récipient.

21. Procédé selon la revendication 20, caractérisé en ce que la dernière étape est effectuée par un processus de stérilisation à haute température, le produit étant un comestible.